# EUROPEAN PATENT APPLICATION

(11) **EP 4 422 017 A1**
(43) Date of publication of application: **28.08.2024**
(21) Application number: 21961202.5
(22) Date of filing: 29.11.2021
(51) Int. Cl.: H02J 7/00, H02J 13/00

(54) **MAGNETIC-ATTRACTION-TYPE FIXED CHARGING APPARATUS AND METHOD**

(30) Priority: 22.10.2021 CN 202111235685; 22.10.2021 CN 202122551977 U
(71) Applicant: Superhii Co., Ltd., Xi'an, Shaanxi 710000 (CN)
(72) Inventor: CHENG, Kun, Xi'an, Shaanxi 710000 (CN); CHANG, Youlong, Xi'an, Shaanxi 710000 (CN); ZOU, Dengwen, Xi'an, Shaanxi 710000 (CN); WANG, You, Xi'an, Shaanxi 710000 (CN)
(74) Representative: Zaboliene, Reda
(86) International application number: PCT/CN2021/133904
(87) International publication number: WO 2023/065464

(57) **Abstract**

Disclosed are a magnetic attraction type fixed charging device and a magnetic attraction type fixed charging method. The device includes a connection status acquisition module for acquiring equipment interface and circuit connection information and uploading same to a database; a database module for choosing whether to charge or not based on the information in the database; a charging status acquisition module for acquiring equipment status information during charging and uploading same to a cloud; a charging mode selection module for selecting a charging mode based on the equipment status information in the cloud; and a data feedback module for sending the equipment status information and the charging mode to a bound mobile intelligent terminal. The present application solves the technical problem that the traditional string-type charging equipment is not capable of controlling the charging power, and the fault location cannot be known in time, which makes the detection process complicated.

## Description

### TECHNICAL FIELD

The present disclosure belongs to the technical field of charging, and in particular relates to a magnetic attraction type fixed charging device and a magnetic attraction type fixed charging method.

### BACKGROUND

The traditional string-type charging equipment is not capable of controlling the charging power, and the fault location cannot be known in time, which makes the detection process complicated. In the event of a failure in individual equipment connected in series, the equipment cannot be accurately located, nor can a remote solution be provided, and continuous charging will also cause damage to the rest of the series equipment. Moreover, when the equipment malfunctions, it is not possible to remotely inform the user, which easily causes secondary damage.

To sum up, the prior art has the following technical problems.

The traditional string-type charging equipment is not capable of controlling the charging power, and the fault location cannot be known in time, which makes the detection process complicated.

### SUMMARY

In order to solve the above technical problems, the present disclosure provides a magnetic attraction type fixed charging device, including:
a connection status acquisition module, used for acquiring equipment interface and circuit connection information and uploading same to a database;
a database module, used for choosing whether to charge or not based on the interface and circuit connection information in the database;
a charging status acquisition module, used for acquiring equipment status information during charging and uploading same to a cloud;
a charging mode selection module, used for selecting a charging mode based on the equipment status information in the cloud; and
a data feedback module, used for sending the equipment status information and the charging mode to a bound mobile intelligent terminal.

Preferably, the connection status acquisition module includes:
an interface sensing unit, used for detecting the equipment interface and circuit connection information based on sensors, where the sensors include a pressure sensor, a voltage sensor, and a current sensor;
a data conversion unit, used for converting the interface and circuit connection information into data information; and
a data storage unit, used for storing the converted data information in the database.

Preferably, the database module is used for acquiring the equipment interface and circuit connection information in the database;
when both an interface and a circuit are connected, choosing to charge; and
when at least one of the interface and the circuit is disconnected, choosing not to charge.

Preferably, the charging status acquisition module includes:
a charging sensing unit, used for acquiring the equipment status information during charging based on sensors, where the sensors include a voltage sensor, a current sensor, and a temperature acquisition sensor; and
a data uploading unit, used for converting the equipment status information acquired by the sensors into wireless transmission signals, and uploading same to the cloud.

Preferably, the charging mode selection module includes:
a charging mode acquiring unit, used for acquiring a preset charging mode, where the charging mode is adjusted according to the equipment status;
a charging mode selection unit, used for selecting the charging mode based on the equipment status information; and
an equipment status updating unit, used for feeding the equipment status information in this charging mode back to the cloud so as to update the equipment status information.

Preferably, the charging mode selection module includes:
a threshold setting unit, used for acquiring preset equipment status thresholds, where the preset equipment status thresholds include a voltage upper limit, a current upper limit, and a temperature upper limit;
a threshold comparison unit, used for comparing the equipment status information with the preset equipment status thresholds; and
a charging control unit, used for stopping charging when the equipment status information exceeds the preset thresholds.

Preferably, the data feedback module includes:
a terminal binding unit, used for acquiring the bound mobile intelligent terminal, where the binding of the mobile intelligent terminal can be changed; and
a feedback unit, used for sending the equipment status information and the current charging mode to the bound mobile intelligent terminal.

A magnetic attraction type fixed charging method includes the steps of:
acquiring equipment interface and circuit connection information and uploading same to a database;
choosing whether to charge or not based on the interface and circuit connection information in the database;
acquiring equipment status information during charging and uploading same to a cloud;
selecting a charging mode based on the equipment status information in the cloud; and
sending the equipment status information and the charging mode to a bound mobile intelligent terminal.

Preferably, the step of acquiring equipment interface and circuit connection information and uploading same to a database includes:
detecting the equipment interface and circuit connection information based on sensors, where the sensors include a pressure sensor, a voltage sensor, and a current sensor;
converting the interface and circuit connection information into data information; and
storing the converted data information in the database.

Preferably, the step of choosing whether to charge or not based on the information in the database includes:
acquiring the equipment interface and circuit connection information in the database;
when both the interface and the circuit are connected, choosing to charge; and
when at least one of the interface and the circuit is disconnected, choosing not to charge.

Preferably, the step of acquiring equipment status information during charging and uploading same to the cloud includes:
acquiring the equipment status information during charging based on sensors, where the sensors include a voltage sensor, a current sensor, and a temperature acquisition sensor; and
converting the equipment status information acquired by the sensors into the wireless transmission signals, and uploading same to the cloud.

Preferably, the step of selecting a charging mode based on the equipment status information in the cloud includes:
acquiring the preset charging mode, where the charging mode is adjusted according to the equipment status;
selecting the charging mode based on the equipment status information; and
feeding the equipment status information in this charging mode back to the cloud so as to update the equipment status information.

Preferably, the step of selecting a charging mode based on the equipment status information in the cloud includes:
acquiring the preset equipment status thresholds, where the preset equipment status thresholds include a voltage upper limit, a current upper limit, and a temperature upper limit;
comparing the equipment status information with the preset equipment status thresholds; and
stopping charging when the equipment status information exceeds the preset thresholds.

Preferably, the step of sending the equipment status information and the charging mode to a bound mobile intelligent terminal includes:
acquiring the bound mobile intelligent terminal, where the binding of the mobile intelligent terminal can be changed; and
sending the equipment status information and the current charging mode to the bound mobile intelligent terminal.

An electronic device includes a memory and a processor, the memory storing computer programs, where the computer programs are executed in the processor to implement any of the above methods.

A non-transitory storage medium is used for storing computer programs, where the computer programs are executed in the processor to implement any of the above methods.

The present disclosure achieves the technical effect of remote control of the series charging interface by remotely controlling the electronic lock-controlled magnetic attraction fixed series charging interface. Through remote control of the Internet of Things, the technical effects of remote control of charging status and timely understanding of fault locations are achieved.

### BRIEF DESCRIPTION OF THE DRAWINGS

FIG. 1 is a schematic diagram of the structure of a magnetic attraction type fixed charging device according to the present application.
FIG. 2 is a schematic diagram of the main structure of a magnetic attraction type fixed charging device provided by Embodiment II according to the present application.
FIG. 3 is a schematic diagram of charging ports of charging equipment of the magnetic attraction type fixed charging device provided by Embodiment II according to the present application.
FIG. 4 is a schematic diagram showing one perspective of the connection between a main body and the charging ports of the magnetic attraction type fixed charging device provided by Embodiment II according to the present application.
FIG. 5 is a schematic diagram showing another perspective of the connection between the main body and the charging ports of the magnetic attraction type fixed charging device provided by Embodiment II according to the present application.

### DETAILED DESCRIPTION OF THE EMBODIMENTS

In order to enable those skilled in the art to better understand the solutions of the present application, the technical solutions in the embodiments of the present application will be clearly and completely described below with reference to the accompanying drawings in the embodiments of the present application. Apparently, the described embodiments are only a part rather than all of the embodiments of the present application. Based on the embodiments in the present application, all other embodiments obtained by those of ordinary skill in the art without making creative efforts shall fall within the scope of protection of the present application.

It should be noted that the terms "first", "second", and the like referred to in the Description and Claims of the present application as well as shown in the above drawings are used to distinguish similar objects, and are not necessarily used to describe a specific order or sequence. It should be understood that the data used in this way may be interchanged in appropriate circumstances to facilitate the description of the embodiments mentioned herein.

In the present application, the orientations or positional relationships indicated by the terms "upper", "lower", "inner", and the like are based on the orientations or positional relationships shown in the drawings. These terms are primarily used to better describe the present application and its embodiments, and are not intended to limit the fact that the device, element, or component referred to must have a particular orientation, or be constructed and operated in a particular orientation.

In addition, some of the above-mentioned terms may be used to express other meanings besides orientations or positional relationships. For example, the term "upper" may also be used to express a certain attachment or connection relationship in some cases. For those of ordinary skill in the art, the specific meanings of these terms in the present application can be understood based on specific circumstances.

Furthermore, the terms "disposed", "provided with", "connected", "fixed" and the like should be construed broadly. For example, "connected" may be a fixed connection, a detachable connection, or a unitary construction; it may be a mechanical connection, or an electrical connection; and it may be a direct connection, or an indirect connection through an intermediary, or an internal communication between two devices, elements, or components. For those of ordinary skill in the art, the specific meanings of the above terms in the present application can be understood based on specific circumstances.

Additionally, the term "a plurality of" shall mean two and more.

It should be noted that the embodiments in the present application and the features of the embodiments may be combined with each other in the case of no conflict. It should be understood that, in the description of the present disclosure, unless otherwise expressly specified and limited, the term "storage medium" may be various media that can store computer programs, such as ROMs, RAMs, magnetic disks or optical disks. The term "processor" may be a CPLD (Complex Programmable Logic Device), an FPGA (Field Programmable Gate Array), an MCU (Microcontroller Unit), a PLC (Programmable Logic Controller), and a CPU (Central Processing Unit), and other chips or circuits with data processing functions. The term "electronic device" may be any device with data processing and storage functions, and may generally include both fixed and mobile terminals. The fixed terminals may be desktop computers, and the like. The mobile terminals may be mobile phones, PADs, mobile robots, and the like. In addition, the technical features involved in the different embodiments of the present disclosure described later can be combined with each other as long as they do not conflict with each other.

In the following, the present disclosure proposes some preferred embodiments to teach those skilled in the art to implement.

### Embodiment I

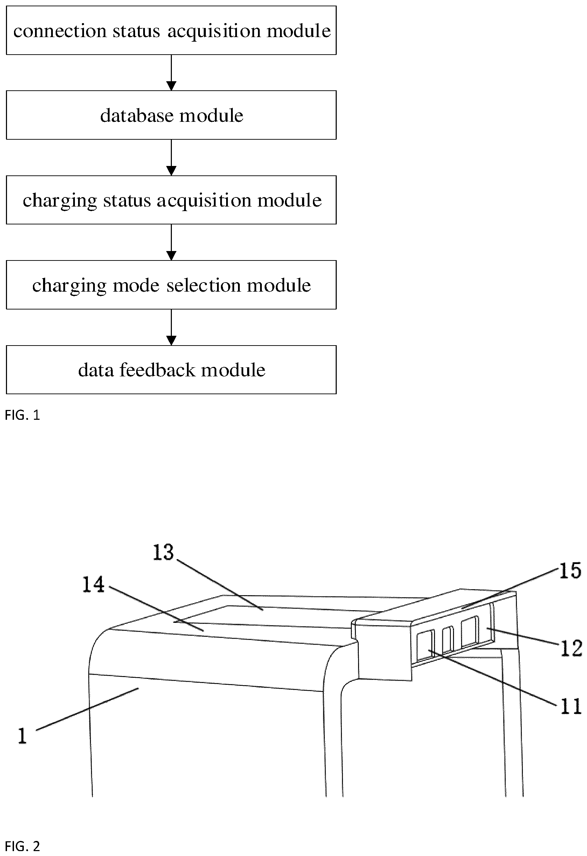

This embodiment provides a magnetic attraction type fixed charging device, as shown in FIG. 1, including:
a connection status acquisition module, used for acquiring equipment interface and circuit connection information and uploading same to a database;
a database module, used for choosing whether to charge or not based on the interface and circuit connection information in the database;
a charging status acquisition module, used for acquiring equipment status information during charging and uploading same to a cloud;
a charging mode selection module, used for selecting a charging mode based on the equipment status information in the cloud; and
a data feedback module, used for sending the equipment status information and the charging mode to a bound mobile intelligent terminal.

In a further embodiment, the connection status acquisition module includes:
an interface sensing unit, used for detecting the equipment interface and circuit connection information based on sensors, where the sensors include a pressure sensor, a voltage sensor, and a current sensor;
a data conversion unit, used for converting the interface and circuit connection information into data information; and
a data storage unit, used for storing the converted data information in the database.

In a further embodiment, the database module is used for acquiring the equipment interface and circuit connection information in the database;
when both an interface and a circuit are connected, choosing to charge; and
when at least one of the interface and the circuit is disconnected, choosing not to charge.

In a further embodiment, the charging status acquisition module includes:
a charging sensing unit, used for acquiring the equipment status information during charging based on sensors, where the sensors include a voltage sensor, a current sensor, and a temperature acquisition sensor; and
a data uploading unit, used for converting the equipment status information acquired by the sensors into wireless transmission signals, and uploading same to the cloud.

In a further embodiment, the charging mode selection module includes:
a charging mode acquiring unit, used for acquiring a preset charging mode, where the charging mode is adjusted according to the equipment status;
a charging mode selection unit, used for selecting the charging mode based on the equipment status information; and
an equipment status updating unit, used for feeding the equipment status information in this charging mode back to the cloud so as to update the equipment status information.

In a further embodiment, the charging mode selection module includes:
a threshold setting unit, used for acquiring preset equipment status thresholds, where the preset equipment status thresholds include a voltage upper limit, a current upper limit, and a temperature upper limit;
a threshold comparison unit, used for comparing the equipment status information with the preset equipment status thresholds; and
a charging control unit, used for stopping charging when the equipment status information exceeds the preset thresholds.

In a further embodiment, the data feedback module includes:
a terminal binding unit, used for acquiring the bound mobile intelligent terminal, where the binding of the mobile intelligent terminal can be changed; and
a feedback unit, used for sending the equipment status information and the current charging mode to the bound mobile intelligent terminal.

From the above description, it can be seen that the present disclosure achieves the following technical effects.
1. The technical effect of remote control of the series charging interface is achieved by remotely controlling the electronic lock-controlled magnetic attraction fixed series charging interface.
2. Through remote control of the Internet of Things, the technical effects of remote control of charging status and timely understanding of fault locations are achieved.

### Embodiment 2

This embodiment provides a magnetic attraction type fixed charging device.

Referring to FIGS. 2-5, a magnetic attraction type fixed charging device includes a fixed base 1; metal conducting plates I 11, a magnet I 12, an AC/DC converter I 13, an Internet of Things device 14, and a lock-controlled fixing plate I 15 are installed above the fixed base 1; and metal conducting plates II 21, a magnet II 22, electronic locks 23, and a lock-controlled fixing plate II 24 are installed above charging ports 2 of charging equipment. The magnetic attraction type fixed charging device further includes a power supply unit (including 13) connected to the metal conducting plates I 11 and the metal conducting plates II 21.

The power supply unit includes a charging circuit, an AC/DC conversion circuit, a protection circuit and a battery, and the battery is electrically connected to the charging circuit, the AC/DC conversion circuit and the protection circuit, respectively.

The charging ports of the charging equipment and the lock-controlled fixing plate vary in product heights and dimensions, and thus the magnetic attraction type fixed charging device has a lifting function to adapt to the height requirements of different products.

The electronic locks have a keyhole function. The device can not only meet the charging needs of multiple charging equipment, but also realize the safety keyhole function of the charging equipment by means of the lock-controlled fixing plate I 15, the electronic lock 23, and the lock-controlled fixing plate II 24.

Real-time big data monitoring of the Internet of Things, which timely uploads and analyzes data such as voltage, current, temperature, and equipment operational condition of the magnetic attraction type fixed charging device through an Internet of Things device unit, achieves big data background monitoring.

The Internet of Things device unit includes data voltage, current, and temperature acquisition sensors, data network transmission equipment, AC/DC conversion circuits, and circuit connections.

The working principle of this embodiment is as follows.

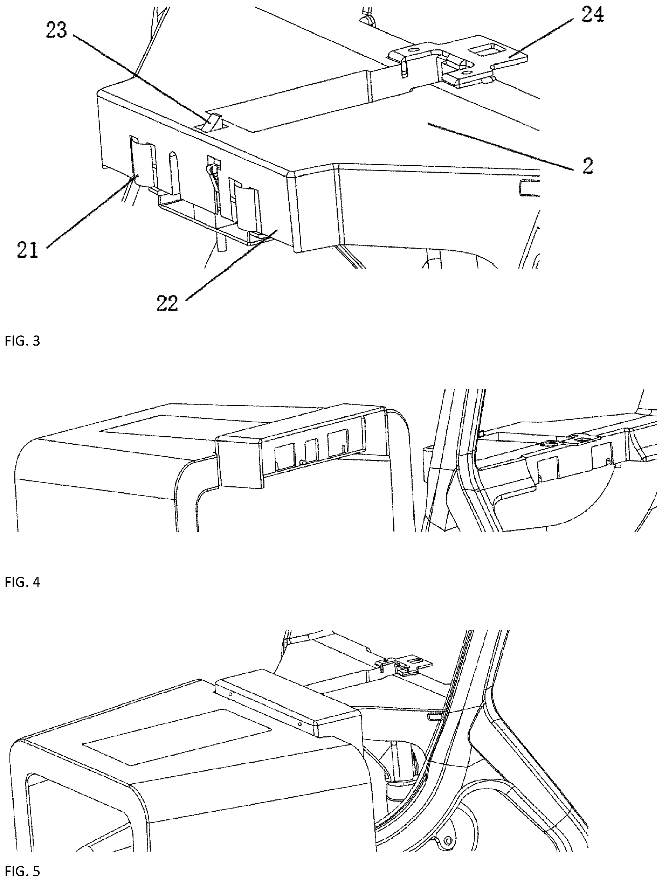

Referring to FIGS. 2- 5, during installation, the magnetic attraction type fixed charging device 1 is fixed to the site by screws or glue, and the charging ports 2 of the charging equipment are fixed to front ends of the charging equipment by screws. In specific applications, as shown in FIG. 3, when the charging equipment are plugged in, the first charging equipment is connected to the magnetic attraction type fixed charging device; and when the first and second charging equipment are plugged in, the magnet 112 on the charging base 1 in the front of the second charging equipment and the magnet II 22 on the charging base at the back of the first charging equipment are magnetically attached to each other tightly, and the metal conducting plates II 21 on the charging base at the back of the first charging equipment and the metal conducting plates I 11 on the charging base in the front of the second charging equipment come into contact for string charging; and multiple equipment are subsequently plugged in turn to complete the charging.

Similarly, when the equipment is plugged in, the first charging equipment is connected to the magnetic attraction type fixed charging device; and when the second charging equipment and the first charging equipment are plugged in, the lock-controlled fixing plate I 15 on the magnetic attraction type fixed charging device is locked with the front electronic lock 23 in the front of the first charging equipment, and the electronic lock 23 in front of the second charging equipment is connected and locked with the lock-controlled fixing plate II 24 at a rear end of the first charging equipment, thus achieving security control.

In specific implementation, the magnetic attraction type fixed charging device of the present disclosure provides a charging function for the multiple string-type charging equipment and a safety lock function for the multiple string-type charging equipment, making the charging equipment more portable in positioning and fixed-point operation, and completing the charging purpose.

### Embodiment III

The magnetic attraction type fixed charging device is used between shopping carts in a shopping mall. All shopping carts are connected and locked by means of magnetic attraction fixation and locking control, and are remotely controlled to be charged through the Internet of Things.

This embodiment provides a magnetic attraction type fixed charging device, including:
a connection status acquisition module, used for acquiring equipment interface and circuit connection information and uploading same to a database;
a database module, used for choosing whether to charge or not based on the interface and circuit connection information in the database;
a charging status acquisition module, used for acquiring equipment status information during charging and uploading same to a cloud;
a charging mode selection module, used for selecting a charging mode based on the equipment status information in the cloud; and
a data feedback module, used for sending the equipment status information and the charging mode to a bound mobile intelligent terminal.

The electronic locks achieve connections by means of magnetic attraction fixation, making it more convenient to lock the shopping carts in the shopping mall. Furthermore, the remote control function of the electronic locks is employed, which eliminates the need for coins to unlock the traditional shopping carts in the shopping mall, so that it is more convenient to use and in line with today's lifestyle.

Moreover, string charging is adopted, which solves the problem that a plurality of magnetic attraction type fixed charging devices connected to the shopping carts in the shopping mall are inconvenient to charge at the same time.

To avoid the occurrence of a malfunction in the magnetic attraction type fixed charging device of a shopping cart, which may cause the overall circuit to be disconnected and unable to charge, the charging status acquisition module has been added to constantly understand the charging status. The charging mode selection module always selects a safe charging mode to avoid malfunctions. After a malfunction occurs, the mobile terminal bound to the data feedback module is also promptly notified.

In a further embodiment, the connection status acquisition module includes:
an interface sensing unit, used for detecting the equipment interface and circuit connection information based on sensors, where the sensors include a pressure sensor, a voltage sensor, and a current sensor;
a data conversion unit, used for converting the interface and circuit connection information into data information; and
a data storage unit, used for storing the converted data information in the database.

In a further embodiment, the database module is used for acquiring the equipment interface and circuit connection information in the database;
when both an interface and a circuit are connected, choosing to charge; and
when at least one of the interface and the circuit is disconnected, choosing not to charge.

In a further embodiment, the charging status acquisition module includes:
a charging sensing unit, used for acquiring the equipment status information during charging based on sensors, where the sensors include a voltage sensor, a current sensor, and a temperature acquisition sensor; and
a data uploading unit, used for converting the equipment status information acquired by the sensors into wireless transmission signals, and uploading same to the cloud.

In a further embodiment, the charging mode selection module includes:
a charging mode acquiring unit, used for acquiring a preset charging mode, where the charging mode is adjusted according to the equipment status;
a charging mode selection unit, used for selecting the charging mode based on the equipment status information; and
an equipment status updating unit, used for feeding the equipment status information in this charging mode back to the cloud so as to update the equipment status information.

In a further embodiment, the charging mode selection module includes:
a threshold setting unit, used for acquiring preset equipment status thresholds, where the preset equipment status thresholds include a voltage upper limit, a current upper limit, and a temperature upper limit;
a threshold comparison unit, used for comparing the equipment status information with the preset equipment status thresholds; and
a charging control unit, used for stopping charging when the equipment status information exceeds the preset thresholds.

In a further embodiment, the data feedback module includes:
a terminal binding unit, used for acquiring the bound mobile intelligent terminal, where the binding of the mobile intelligent terminal can be changed; and
a feedback unit, used for sending the equipment status information and the current charging mode to the bound mobile intelligent terminal.

### Embodiment IV

A magnetic attraction type fixed charging method includes the steps of:
S100, acquiring equipment interface and circuit connection information and uploading same to a database;
S200, choosing whether to charge or not based on the information in the database;
S300, acquiring equipment status information during charging and uploading same to a cloud;
S400, selecting a charging mode based on the equipment status information in the cloud; and
S500, sending the equipment status information and the charging mode to a bound mobile intelligent terminal.

In a further embodiment, the step of acquiring equipment interface and circuit connection information and uploading same to a database includes:
S110, detecting the equipment interface and circuit connection information based on sensors so as to determine interface connection statuses and circuit connection statuses, where the sensors include a pressure sensor, a voltage sensor, and a current sensor;
S 120, converting the interface and circuit connection information into data information; and
S 130, storing the converted data information in the database.

In a further embodiment, the step of choosing whether to charge or not based on the information in the database includes:
acquiring the equipment interface and circuit connection information in the database;
when both the interface and the circuit are connected, choosing to charge; and
when at least one of the interface and the circuit is disconnected, choosing not to charge.

In a further embodiment, the step of acquiring equipment status information during charging and uploading same to the cloud includes:
S310, acquiring the equipment status information during charging based on sensors, where the sensors include a voltage sensor, a current sensor, and a temperature acquisition sensor; and
S320, converting the equipment status information acquired by the sensors into the wireless transmission signals, and uploading same to the cloud.

In a further embodiment, the step of selecting a charging mode based on the equipment status information in the cloud includes:
S410, acquiring the preset charging mode, where the charging mode is adjusted according to the equipment status;
S420, selecting the charging mode based on the equipment status information; and
S430, feeding the equipment status information in this charging mode back to the cloud so as to update the equipment status information.

In a still further embodiment, the step of selecting a charging mode based on the equipment status information in the cloud includes:
S440, acquiring the preset equipment status thresholds, where the preset equipment status thresholds include a voltage upper limit, a current upper limit, and a temperature upper limit;
S450, comparing the equipment status information with the preset equipment status thresholds; and
S460, stopping charging when the equipment status information exceeds the preset thresholds.

In a further embodiment, the step of sending the equipment status information and the charging mode to a bound mobile intelligent terminal includes:
S510, acquiring the bound mobile intelligent terminal, where the binding of the mobile intelligent terminal can be changed; and
S520, sending the equipment status information and the current charging mode to the bound mobile intelligent terminal.

### Embodiment V

The embodiment of the present disclosure further includes an electronic device, which includes a memory and a processor, the memory storing computer programs, where the computer programs are executed in the processor to implement the magnetic attraction type fixed charging method. The method includes the following steps:
S100, acquiring equipment interface and circuit connection information and uploading same to a database;
S200, choosing whether to charge or not based on the interface and circuit connection information in the database;
S300, acquiring equipment status information during charging and uploading same to a cloud;
S400, selecting a charging mode based on the equipment status information in the cloud; and
S500, sending the equipment status information and the charging mode to a bound mobile intelligent terminal.

### Embodiment VI

In this embodiment, the present disclosure further provides a readable storage medium, where computer programs are stored in the readable storage medium; and the computer programs are executed in the processor to implement the magnetic attraction type fixed charging method. The method includes the following steps:
S100, acquiring equipment interface and circuit connection information and uploading same to a database;
S200, choosing whether to charge or not based on the interface and circuit connection information in the database;
S300, acquiring equipment status information during charging and uploading same to a cloud;
S400, selecting a charging mode based on the equipment status information in the cloud; and
S500, sending the equipment status information and the charging mode to a bound mobile intelligent terminal.

The readable storage medium may be a computer storage medium or a communication medium. Communication media include any medium that facilitates transfer of a computer program from one place to another. Computer storage media may be any available media that can be accessed by a general purpose or special purpose computer. For example, a readable storage medium is coupled to a processor such that the processor can read information from, and write information to, the readable storage medium. Of course, the readable storage medium may also be an integral part of the processor. The processor and the readable storage medium may reside in Application Specific Integrated Circuits (ASIC). Additionally, the ASIC may be located in user equipment. Of course, the processor and the readable storage medium may also reside as discrete components in a communication device. The readable storage medium may be a read only memory (ROM), a random access memory (RAM), a CD-ROM, a magnetic tape, a floppy disk, an optical data storage device, or the like.

The present disclosure also provides a program product, including execution instructions stored in a readable storage medium. At least one processor of the device can read the execution instructions from the readable storage medium, and at least one processor executes the execution instructions to enable the device to implement the methods provided in the various embodiments described above.

In the foregoing terminal or server embodiments, it should be understood that the processor may be a Central Processing Unit (CPU), or may be another general processor, a Digital Signal Processor (DSP), or the like. The general processor may be a microprocessor, or the processor may also be any conventional processor, or the like. In conjunction with the steps of the method disclosed by the present disclosure, it may be directly embodied as a completion executed by a hardware processor, or by a combination of hardware and software modules in the processor.

It should be noted that the steps shown in the flowcharts of the accompanying drawings may be executed in a computer device through a set of computer-executable instructions; and although a logical sequence is shown in the flowcharts, in some cases, the steps shown or described may be executed in an order different from that herein.

Obviously, those skilled in the art should understand that the above-mentioned modules or steps of the present disclosure can be implemented by a general purpose computing device, which can be centralized on a single computing device, or distributed in a network composed of a plurality of computing devices. Optionally, they may be implemented with program codes executable by a computing device, so that they can be stored in a storage device and executed by the computing device. Alternatively, they can be made into individual integrated circuit modules, or a plurality of modules or steps thereof may be made into a single integrated circuit module. As such, the present disclosure is not limited to any particular combination of hardware and software.

The foregoing descriptions are merely exemplary embodiments of the present disclosure, and are not intended to limit the present disclosure. Any modifications, equivalent replacements and improvements made within the spirit and principles of the present disclosure shall be included in the protection scope of the present disclosure.

## Claims

1. A magnetic attraction type fixed charging device, comprising:
a connection status acquisition module, used for acquiring equipment interface and circuit connection information and uploading same to a database;
a database module, used for choosing whether to charge or not based on the interface and circuit connection information in the database;
a charging status acquisition module, used for acquiring equipment status information during charging and uploading same to a cloud;
a charging mode selection module, used for selecting a charging mode based on the equipment status information in the cloud; and
a data feedback module, used for sending the equipment status information and the charging mode to a bound mobile intelligent terminal.

2. The device according to claim 1, wherein the connection status acquisition module comprises:
an interface sensing unit, used for detecting the equipment interface and circuit connection information based on sensors, wherein the sensors comprise a pressure sensor, a voltage sensor, and a current sensor;
a data conversion unit, used for converting the interface and circuit connection information into data information; and
a data storage unit, used for storing the converted data information in the database.

3. The device according to claim 1, wherein the database module is used for acquiring the equipment interface and circuit connection information in the database;
when both an interface and a circuit are connected, choosing to charge; and
when at least one of the interface and the circuit is disconnected, choosing not to charge.

4. The device according to claim 1, wherein the charging status acquisition module comprises:
a charging sensing unit, used for acquiring the equipment status information during charging based on sensors, wherein the sensors comprise a voltage sensor, a current sensor, and a temperature acquisition sensor; and
a data uploading unit, used for converting the equipment status information acquired by the sensors into wireless transmission signals, and uploading same to the cloud.

5. The device according to claim 1, wherein the charging mode selection module comprises:
a charging mode acquiring unit, used for acquiring a preset charging mode, wherein the charging mode is adjusted according to the equipment status;
a charging mode selection unit, used for selecting the charging mode based on the equipment status information; and
an equipment status updating unit, used for feeding the equipment status information in this charging mode back to the cloud so as to update the equipment status information.

6. The device according to claim 5, wherein the charging mode selection module comprises:
a threshold setting unit, used for acquiring preset equipment status thresholds, wherein the preset equipment status thresholds comprise a voltage upper limit, a current upper limit, and a temperature upper limit;
a threshold comparison unit, used for comparing the equipment status information with the preset equipment status thresholds; and
a charging control unit, used for stopping charging when the equipment status information exceeds the preset thresholds.

7. The device according to claim 1, wherein the data feedback module comprises:
a terminal binding unit, used for acquiring the bound mobile intelligent terminal, wherein the binding of the mobile intelligent terminal is capable of being changed; and
a feedback unit, used for sending the equipment status information and the current charging mode to the bound mobile intelligent terminal.

8. A magnetic attraction type fixed charging device, including:
a fixed base (1); wherein a metal conducting plate I (11), a magnet I (12), an AC/DC converter I (13), an internet of things device (14), and a lock-controlled fixing plate I (15) are arranged above the fixed base (1); and
a charging port (2), wherein a metal conducting plate II (21), a magnet II (22), an electronic lock (23), and a lock-controlled fixing plate II (24) are installed above the charging port (2) of the charging device,
the charging device further includes a power supply unit (including 13) connected to the metal conducting plate I (11) and the metal conducting plate II (21).

9. The magnetic attraction type fixed charging device according to claim 8, wherein
the charging device comprises a first charging device and a second charging device, wherein the charging device is configured for plug-in charging;
the first charging device is connected to a magnetic attraction type fixed charging device, and when the second charging device and the first charging device are plugged in, the magnet I (12) on the charging base (1) in front of the second charging device and the magnet II (22) on the charging base at a back of the first charging device are magnetically attached to each other tightly,
the metal conducting plates II (21) on the charging base at the back of the first charging device and the metal conducting plate I (11) on the charging base (1) in the front of the second charging device come into contact for string charging.

10. The magnetic attraction type fixed charging device according to claim 8, wherein
the charging device is configured for plug-in charging,
the first charging device is connected to the magnetic attraction type fixed charging device; and when the second charging device and the first charging device are plugged in, the lock-controlled fixing plate I (15) on the magnetic attraction type fixed charging device is locked with a front electronic lock (23) in the front of the first charging device, and the electronic lock (23) in front of the second charging device is connected and locked with the lock-controlled fixing plate II (24) at a rear end of the first charging device, thus achieving security control.

11. A magnetic attraction type fixed charging method, comprising:
acquiring equipment interface and circuit connection information and uploading same to a database;
choosing whether to charge or not based on the interface and circuit connection information in the database;
acquiring equipment status information during charging and uploading same to a cloud;
selecting a charging mode based on the equipment status information in the cloud; and
sending the equipment status information and the charging mode to a bound mobile intelligent terminal.

12. The method according to claim 11, wherein
the step of acquiring equipment interface and circuit connection information and uploading same to a database comprising:
the interface connection and circuit connection information of the acquisition device are uploaded to a database, including:
detecting the equipment interface and circuit connection information based on sensors, wherein the sensors comprise a pressure sensor, a voltage sensor, and a current sensor;
converting the interface and circuit connection information into data information; and
storing the converted data information in the database.

13. The method according to claim 11, wherein
the step of choosing whether to charge or not based on the information in the database, comprising:
acquiring the equipment interface and circuit connection information in the database;
when both an interface and a circuit are connected, choosing to charge; and
when at least one or all of the interface and the circuit is disconnected, choosing not to charge.

14. The method according to claim 11, wherein
the step of acquiring equipment status information during charging and uploading same to a cloud, comprising:
acquiring the equipment status information during charging based on sensors, wherein the sensors comprise a voltage sensor, a current sensor, and a temperature acquisition sensor; and
converting the equipment status information acquired by the sensors into wireless transmission signals, and uploading same to the cloud.

15. The method according to claim 11, wherein
the step of selecting a charging mode based on the equipment status information in the cloud, comprising:
when acquiring a preset charging mode, wherein the charging mode is adjusted according to the equipment status;
selecting the charging mode based on the equipment status information; and
feeding the equipment status information in this charging mode back to the cloud so as to update the equipment status information.

16. The method according to claim 11, wherein
the step of selecting a charging mode based on the equipment status information in the cloud, comprising:
acquiring preset equipment status thresholds, wherein the preset equipment status thresholds comprise a voltage upper limit, a current upper limit, and a temperature upper limit;
comparing the equipment status information with the preset equipment status thresholds; and
stopping charging when the equipment status information exceeds the preset thresholds.

17. The method according to claim 11, wherein
the step of sending the equipment status information and the charging mode to a bound mobile intelligent terminal, comprising:
acquiring the bound mobile intelligent terminal, wherein the binding of the mobile intelligent terminal is capable of being changed; and
sending the equipment status information and the current charging mode to the bound mobile intelligent terminal

18. An electronic device, comprising a memory and a processor, the memory storing computer programs, wherein the computer programs are executed in the processor to implement the method according to any one of claims 11-17.

19. A non-transitory storage medium, used for storing computer programs, wherein the computer programs are executed in the processor to implement the method according to any one of claims 11-17.
